(19) Europäisches Patentamt
European Patent Office
Office européen des brevets

(11) **EP 2 306 169 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(51) Int Cl.:
*G01L 1/24* *(2006.01)*    *G01M 11/00* *(2006.01)*
*G01M 5/00* *(2006.01)*

(21) Anmeldenummer: **10185936.1**

(22) Anmeldetag: **01.10.2010**

(54) **Verfahren zum Bestimmen eines Dehnungsprofils in einer optischen Faser**

Method for determining an elongation profile in an optical fibre

Procédé de détermination d'un profil d'extension dans une fibre optique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2009 DE 102009048155**

(43) Veröffentlichungstag der Anmeldung:
**06.04.2011 Patentblatt 2011/14**

(73) Patentinhaber: **Bundesanstalt für Materialforschung und -prüfung (BAM)**
**12205 Berlin (DE)**

(72) Erfinder: **Nöther, Nils**
**10965, Berlin (DE)**

(74) Vertreter: **Zimmermann & Partner**
**Patentanwälte mbB**
**Postfach 330 920**
**80069 München (DE)**

(56) Entgegenhaltungen:
• **R. BERNINI ET AL: "An accurate high-resolution technique for distributed sensing based on frequency-domain Brillouin scattering", IEEE PHOTONICS TECHNOLOGY LETTERS, Bd. 18, Nr. 1, 1. Januar 2006 (2006-01-01), Seiten 280-282, XP055211368, ISSN: 1041-1135, DOI: 10.1109/LPT.2005.862004**
• **R. Bernini ET AL: "Stimulated Brillouin scattering frequency-domain analysis in a single-mode optical fiber for distributed sensing", Optics Letters, 1. September 2004 (2004-09-01), Seiten 1977-1979, XP055211437, United States DOI: 10.1364/OL.29.001977 Gefunden im Internet: URL:http://www.opticsinfobase.org/abstract .cfm?URI=ol-29-17-1977 [gefunden am 2015-09-04]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Seitdem verteilte Brillouin-Erfassung bei praktischen Anwendungen ein etabliertes Erfassungsinstrument geworden ist, sind Anstrengungen unternommen worden, die Technik von der Limitierung ihrer räumlichen Auflösung auf ungefähr 1 m zu befreien. Erste vielversprechende Aussichten wurden von Messungen von Brillouin-Verstärkungsspektren berichtet, die mit Hilfe von Pulsen weniger Nanosekunden aufgenommen wurden: Hierbei wurde beobachtet, dass die Spektralverbreiterung der Verstärkungsspektren, von denen erwartet wurde, dass sie sich noch weiter erhöhen, wenn die Pulse immer kürzer und kürzer werden, stark zurückgeht, wenn kurze Pulse, welche kürzer als 5 ns sind, benutzt wurden. Die Anwesenheit eines sogenannten Vorpump-Pulses (ein breiter und schwacher Puls, der in die Faser eintritt, und von dem eigentlichen, sehr kurzen Pumppuls gefolgt wird) wurde benutzt, um solche Messungen zu reproduzieren.

In den letzten Jahren wurden physikalische Interpretationen dieser Beobachtungen vorgeschlagen und kontrovers diskutiert. Die neueste Interpretation wurde von Thevenaz et al. gegeben, welche durch eine experimentelle Konfiguration unterstrichen wird, die die neue Einsicht, Brillouin-Messungen mit hoher Auflösung durchzuführen, benutzt. Hierbei wird die Zerfallszeit der akustischen Welle durch Abschneiden der Wechselwirkung zwischen dem Pumppuls und dem Dauerstrich-Stokes verkürzt. Dies wird durch das Ausführen einer Phasenverschiebung von $\pi$ innerhalb des Pumppulses erreicht, welche die Anregungsphase der akustischen Welle herumdreht, wodurch die davor vorhandene Wechselwirkung rasch abgeschwächt wird. Dieser vielversprechende und theoretisch stichhaltige Ansatz wurde als verteilte Brillouin-Echo-Erfassung vorgestellt.

Jedoch haben diese Techniken noch keine Reife erreicht, um in kommerziell verfügbaren Brillouin-optische-Zeitbereichsanalyse(BOTDA)-Systemen Eingang zu finden. Diese Ansätze konzentrieren sich auf die physikalische Natur von kurzen optischen Pulsen und ihre Auswirkung auf Brillouin-Wechselwirkung.

Auch wenn einige Anwendungen, zum Beispiel Deichüberwachung, keine räumliche Auflösung benötigen, welche weit unter ein paar Metern liegt, ist es leicht vorstellbar, dass ein großes Feld von neuen Anwendungen sich eröffnen würde, wenn die räumliche Auflösung wesentlich verbessert werden könnte und möglicherweise in den Zentimeterbereich eintritt.

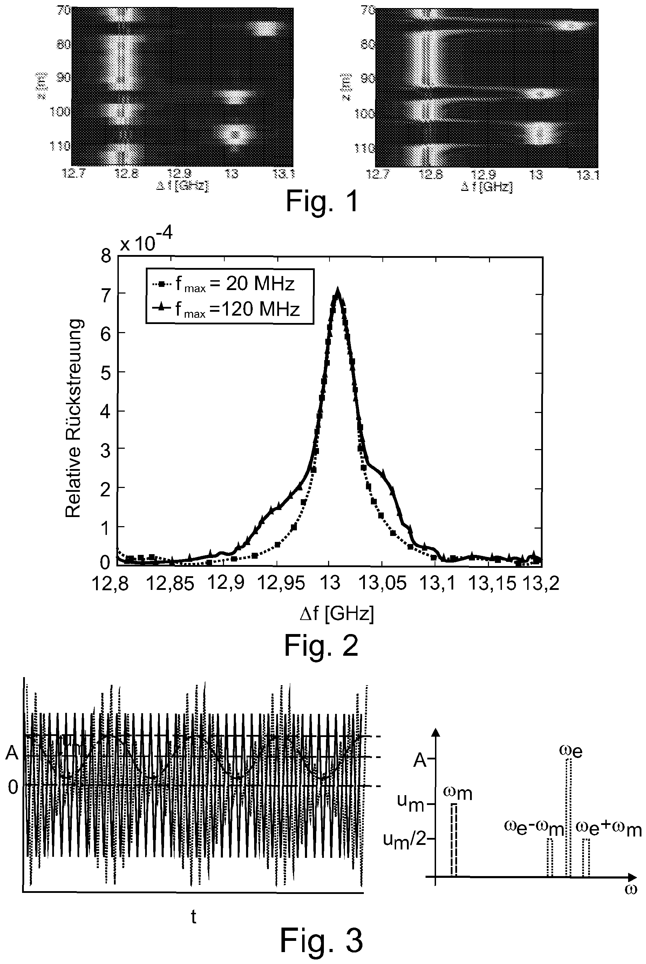

Die räumliche Auflösung eines Brillouin-optische-Frequenzbereichsanalyse-(BOFDA)-Systems entspricht direkt dem Sweep-Bereich der Modulationsfrequenz ($f_{max}$ - $f_{min}$), wie in Fig. 1 gezeigt.

Bei einer oberen Grenze der Modulationsfrequenz $f_{max}$ = 120 MHz liegt die räumliche Auflösung bereits unter 1 m. Jedoch kann die Modulation nicht einfach über den Gigahertz-Bereich erhöht werden. Es gibt einige Schwierigkeiten, denen begegnet werden muss, wenn der Pumpstrahl mit immer höheren Frequenzen moduliert wird, um höhere räumliche Auflösungen zu erzielen. Die Erzeugung und Verarbeitung des Basisbandsignals stellt hohe Anforderungen an die Signalquellen, die optoelektronischen Komponenten und die ganze Verarbeitungselektronik. Besonders der dynamische Bereich des Lichtempfängers wird herausgefordert, da das rückgestreute Signal bei hohen Frequenzen sehr schwach wird; ausgetüftelte Filtertechniken werden benötigt, um das rückgestreute Signal von dem Hintergrundrauschen zu unterscheiden. Im Gegensatz zu diesen Problemen, die ziemlich technologischer Natur sind, gibt es ein Phänomen, welches in die Messungen offensichtlich eine Art von Unschärferelation einbringt: Bei größerer räumlicher Auflösung kann eine gleichzeitige Erniedrigung der Auflösung der Messgröße $f_B$ beobachtet werden. Diese Beziehung scheint eine fundamentale und bedingungslose Begrenzung für den Versuch, verteilte Messungen mit beliebiger Präzision durchzuführen, zu sein. Figur 2 zeigt das Auftreten dieses Phänomens innerhalb der räumlich aufgelösten Messung von Fig. 1.

Während die Messung mit einem Sweep-Bereich von bis zu 20 MHz ein sauberes Lorentz-Spektrum zeigt, erscheinen auf beiden Steigungen der von der 120 MHz-Messung erhaltenen Kurve starke Artefakte. Obwohl die Spitze des Spektrums unverändert bleibt, werden diese Artefakte das Ergebnis eines Kurvenanpassungsverfahrens verschlechtern und dadurch eine Unsicherheit in der Bestimmung der Messgröße $f_B$ für jeden räumlich aufgelösten Messpunkt nach der inversen schnellen Fourier-Transformation (IFFT) hineinbringen. Es kann gezeigt werden, dass die Artefakte bei höheren Werten von $f_{max}$ größer werden, ihr Auftreten beginnt, wenn $f_{max}$ den Bereich der Brillouin-Linienbreite von $\Delta F_B \approx 35$ MHz passiert.

Die Artefakte sind kein Phänomen, welches nur Messungen im Frequenzbereich inhärent ist und die Unschärferelation der räumlichen und Messgrößenauflösung ist kein spezielles Problem des BOFDA-Systems: Bei hohen räumlichen Auflösungen werden äquivalente Artefakte beobachtet, wenn Impulsreflektometrie-Messungen durchgeführt werden. Seit einigen Jahren ist allgemein anerkannt, dass mit dieser Verbreiterung der Brillouin-Verstärkungsspektren die räumliche Auflösung des BOTDA-Systems auf ungefähr 1 m beschränkt bleiben würde, genauso wie beim BOFDA-System.

Schritt für Schritt wurde ein theoretischer Ansatz präsentiert, der die Verbreiterung der Brillouin-Verstärkungsspektren bei kurzen Pulsen berücksichtigt, das Phänomen wie es im Zeitbereich auftritt. Von diesen Analysen sind die Mechanismen im Frequenzbereich nicht direkt ersichtlich. Für die Frequenzbereichsanalyse wurde von Bernini et al. ein theoretisches Modell für das Problem vorgeschlagen und numerisch gelöst, wobei die Überlagerung von Dauerstrich und Wechsel-Anteilen für die Pump-, Stokes- und akustische Welle vorausgesetzt wurden. Dieses Modell führt zu einer Erklärung der Phantom-Verstärkungsspektren durch gegenseitige Wechselwirkung der Lichtwellen mit einer intensitätsmodulierten akustischen Welle.

Die vorliegende Erfindung basiert auf einer vollständigen Analyse des Problems, wobei man sich auf eine physikalischere Erklärung der Ereignisse fokussiert hat. Im Gegensatz zum Modell von Bernini et al. verzichtet dieser Ansatz auf die Annahme, dass die akustische Welle in ihrer Intensität bei Modulationsfrequenzen, die die Brillouin Linienbreite ($f_m > \Delta F_B$) übersteigen, moduliert ist. Da die lorentzförmige Form der Brillouin-Verstärkungsspektren auf der endlichen Phononenlebenszeit basiert und dadurch eine obere Grenzfrequenz für die Anregung von akustischen Wellen einführt, bringt der Einschluss von Wechsel-Komponenten für alle der drei bei dem Prozess beteiligten Wellen einige Schwierigkeiten mit sich. Die zentrale physikalische Annahme, die den Ausführungsformen der vorliegenden Erfindung zugrunde liegt, vermeidet dieses Dilemma durch getrennte Berücksichtigung der spektralen Komponenten des optischen Schwebungssignalmusters. Das Schwebungssignalmuster (oder präziser seine Einhüllende) regt die akustische Welle durch Elektrostriktion an. Jede seiner verschiedenen spektralen Komponenten kann als ein ständig präsentes periodisches Intensitätsmuster angesehen werden.

Wie R. Bernini et al. in dem Artikel "An accurate high-resolution technique for distributed sensing based on frequency-domain Brillouin scattering" (IEEE PHOTONICS TECHN. LETTERS, vol. 18, no. 1, p. 280 - 282, 2006) zeigen, können durch eine harmonische Rekonstruktion der Daten, die auf einem Minimieren einer quadratischen Kostenfunktion basiert, die einem Fehler zwischen gemessenen Daten und Modeldaten entspricht, Spannungs- /Temperatur-Profile bestimmt werden (zu den Grundlagen von BOFDA siehe auch die darin als Referenz [4] zitierte Arbeit von R. Bernini et al.).

Im Hinblick auf obiges wird ein Verfahren zum Bestimmen eines Dehnungsprofils in einer optischen Faser bereitgestellt. Das Verfahren umfasst Durchführen einer verteilten Brillouin-Erfassungs-Messung im Frequenzbereich an der optischen Faser, um Frequenzbereich-Messdaten zu erhalten, Durchführen einer Entfaltungsoperation der Frequenzbereich-Messdaten im Frequenzbereich, wobei die Frequenzbereich-Messdaten mit einer Fehlerfunktion entfaltet werden, Durchführen einer inversen Fourier-Transformation der entfalteten Frequenzbereich-Messdaten, um Zeitbereich-Messdaten zu erhalten, und Erlangen eines Dehnungsprofils der optischen Faser auf Basis der Zeitbereich-Messdaten.

Die vorliegende Erfindung schlägt einen geradlinigen Ansatz vor, welcher aus der theoretischen Analyse der Artefakte entnommen ist, die bei Frequenzbereichsmessungen auftreten. Es nutzt die spezielle Natur des BOFDA-Systems und unterscheidet sich von dem Zeitbereichs-Ansatz dadurch, dass es nur in der Nachbearbeitung durchgeführt wird, was bedeutet, dass keine Mess-Hardware höherer Komplexität notwendig ist, um die Unschärferelation der räumlichen und Dehnungsauflösung zu überwinden. Wegen der Entfaltung der Frequenzmessdaten mit der Fehlerfunktion kann die räumliche Auflösung des Dehnungsprofils wesentlich verbessert werden. Insbesondere kann durch das oben beschriebene Verfahren eine räumliche Auflösung unter 1 m erreicht werden. Ferner benötigt das oben beschriebene Verfahren keine zusätzlichen Hardwarekomponenten und kann deshalb bei existierenden Messsystemen implementiert werden.

Nach einer Ausführungsform wird die Fehlerfunktion auf Basis der Überlagerung eines Pumpsignals eines Pumplasers und eines Stokessignals eines Stokeslasers bestimmt. Zum Beispiel kann die Fehlerfunktion auf Basis der Modulationsparameter des Pumpsignals eines Pumplasers und eines Stokessignals eines Stokeslasers bestimmt werden, entweder in Kombination mit anderen Parametern oder vom Modulationsparameter alleine.

Nach einer weiteren Ausführungsform ist die Fehlerfunktion eine lineare Überlagerung der Funktionen $\Phi_\xi$, welche gegeben sind durch:

$$\Phi_\xi = E_p E_s^* A_p A_s \cdot \begin{cases} \dfrac{m_p m_s}{4} \cdot e^{j(k \cdot z - (\omega - 2\omega_m)t)} & \xi = 1 \\[2mm] \dfrac{m_p + m_s}{2} \cdot e^{j(k \cdot z - (\omega - \omega_m)t)} & \xi = 2 \\[2mm] \left(1 + \dfrac{m_p m_s}{2}\right) \cdot e^{j(k \cdot z - \omega \cdot t)} & \xi = 3 \\[2mm] \dfrac{m_p + m_s}{2} \cdot e^{j(k \cdot z - (\omega + \omega_m)t)} & \xi = 4 \\[2mm] \dfrac{m_p m_s}{4} \cdot e^{j(k \cdot z - (\omega + 2\omega_m)t)} & \xi = 5 \end{cases}$$

wobei $E_p$ die elektrische Feldstärke der Pumpwelle ist, $A_p$ die Amplitude der Pumpwelle ist, $m_p$ der Modulationsindex der Pumpwelle ist, $E_s^*$ die konjugierte- komplexe elektrische Feldstärke der Stokeswelle ist, $A_s$ die Amplitude der Stokeswelle ist, $m_s$ der Modulationsindex der Stokeswelle ist, und $\omega_m$ die Modulationsfrequenz ist.

Nach einer weiteren Ausführungsform wird die Fehlerfunktion durch eine lineare Überlagerung von $\Phi_\xi$ mit $\xi =$ 2, 3, 4 bestimmt. Dementsprechend werden lediglich die drei mittleren Bänder für die Entfaltung berücksichtigt und die äußeren Seitenbänder werden vernachlässigt. Folglich kann die Entfaltungsoperation wesentlich vereinfacht werden.

Nach Ausführungsformen der vorliegenden Erfindung kann die Entfaltung durch den Wiener-Algorithmus oder den Lucy-Richardson-Algorithmus durchgeführt wird.

Ferner kann ein Computerprogramm bereitgestellt werden, welches zur Ausführung eines Verfahrens nach einer Ausführungsform der vorliegenden Erfindung angepasst ist, wenn es auf einem Computer ausgeführt wird.

Nach einem weiteren Aspekt kann eine Vorrichtung zur verteilten Brillouin- Erfassung angepasst sein, ein Verfahren nach einer Ausführungsform der vorliegenden Erfindung durchzuführen.

Die Vorrichtung und Verfahren, wie sie oben beschrieben sind, können zur Bauwerksüberwachung verwendet werden, insbesondere zur Überwachung von ausgedehnten Strukturen wie Deichen, Brücken, Eisenbahnbetten, Fahrbahnen oder dergleichen.

Weitere Aspekte, Vorteile und Merkmale der vorliegenden Erfindung sind von den abhängigen Ansprüchen, der Beschreibung und den beiliegenden Zeichnungen ersichtlich.

Eine vollständige und nachbearbeitbare Offenbarung einschließlich der besten Ausführungsform davon für einen Fachmann wird insbesondere im Rest der Beschreibung gegeben, der Bezug auf die beigefügten Figuren nimmt, wobei:

Fig. 1 eine Nahaufnahme des definierten Dehnungsprofils einer Faser zeigt. Links: $f_{max}$ = 20 MHz (räumliche Auflösung: 5 m). Rechts: $f_{max}$ = 120 MHz (räumliche Auflösung: 0,83 m).

Fig. 2 einen Querschnitt durch die Brillouin-Verstärkungsspektren des definierten Dehnungsprofils bei z = 144 m zeigt und die von Messungen bei hohen Modulationsfrequenzen herrührenden Artefakte zeigt.

Fig. 3 die Amplitudenmodulation beispielhaft erläutert, wobei ein sinusförmiges Trägersignal durch ein sinusförmiges Signal mit niedrigerer Frequenz multipliziert wird. Links: Modulation im Zeitbereich; Rechts: resultierendes Frequenzspektrum

Fig. 4 Spektrallinien von SBS-Wechselwirkung in dem Fall eines modulierten Pumpstrahls zeigt.

Fig. 5 die Brillouin-Verstärkungsspektren einer homogen gedehnten Faser (4400 m) bei unterschiedlichen Modulationsfrequenzen zeigt.

Fig. 6 die Größe der Transferfunktion (BOFDA-Rohdaten vor IFFT) einer 2200 m ungedehnten Faser zeigt.

Fig. 7 die Faltung der Brillouin-Verstärkungsspektren g($\Delta$f) mit der spektralen Darstellung der Anregung $\Phi_\xi$, unter der Annahme, dass die Faltung reversibel ist, illustriert.

Fig. 8 auf der linken Seite die gemessenen Brillouin-Verstärkungsspektren der 2200 m-Faser bei $f_m$ = 99 MHz und der PSF zeigt. Auf der rechten Seite ist das Ergebnis der Entfaltung durch einfaches Dividieren der Fourier-Transformierten der gemessenen Verstärkungsspektren und der PSF gezeigt.

Fig. 9 Wiederherstellungs-Ergebnisse zeigt, welche von bei digitaler Bildbearbeitung benutzten Entfaltungstechniken erhalten wurden. Links: Wiener-Entfaltung. Rechts: Lucy-Richardson-Algorithmus.

Fig. 10 die Größe der Transferfunktion der 2200 m ungedehnten Faser nach Wiederherstellung mit Hilfe des Lucy-Richardson-Algorithmus zeigt.

Fig. 11 die Wiederherstellung der Messung des definierten Dehnungsprofils zeigt. Links: ursprüngliche Messdaten. Rechts: Daten nach Anwendung des Lucy-Richardson-Algorithmus.

Fig. 12 Querschnitte durch die Messdaten des definierten Dehnungsprofils zeigt, welche mit Hilfe des Lucy-Richardson-Algorithmus wiederhergestellt wurden. Links: Daten vor IFFT ($f_m$ = 62,8 MHz). Rechts: Daten nach IFFT (z = 157 m).

Fig. 13 einen Vergleich der Messungen an dem definierten Dehnungsprofil zeigt.

Fig. 14 ein Flussdiagram eines Verfahrens nach einer Ausführungsform der vorliegenden Erfindung zeigt.

Es wird jetzt im Detail auf einige Ausführungsformen Bezug genommen, von denen in jeder Figur ein oder mehrere Beispiele illustriert sind. Jedes Beispiel ist durch Erläuterung bereitgestellt und nicht als Begrenzung gedacht. Zum Beispiel können Merkmale, die als Teil einer Ausführungsform illustriert oder beschrieben sind, auch bei oder in Verbindung mit anderen Ausführungsformen benutzt werden, um noch weitere Ausführungsformen zu erzielen. Es ist beabsichtigt, dass die vorliegende Offenbarung solche Modifikationen und Variationen beinhaltet.

Die Untersuchungen der Mechanismen, die mit der stimulierten Brillouin-Streuung einhergehen, sind den Fachleuten bekannt und werden deshalb nicht wiederholt. Sie führten zu einer spektralen Darstellung der Wechselwirkung: Zwei optische Frequenzen mit einem Offset $\Delta f$ überlagern sich zu einem Schwebungssignalmuster, dessen Einhüllende eine Frequenz in dem Bereich einer akustischen Welle in dem Medium hat. Wegen der nichtlinearen Natur der Wechselwirkung

$$\Delta E^2 = \frac{\partial^2}{\partial z^2}\left(\frac{1}{2}\left(E_p e^{j(k_p z - \omega_p t)} + c.c. + E_s e^{j(-k_s z - \omega_s t)} + c.c.\right)\right)^2 \qquad (I),$$

tritt Frequenzmischung auf und ein breites Spektrum (aus dem das Schwebungssignalmuster der Intensitäten besteht) kann bestimmt werden. Für die Messung der Brillouin-Verstärkungs spektren wird eine definierte einzelne Spektrallinie des Schwebungssignalmusters innerhalb des die akustische Welle anzuregenden Bereichs benötigt. Dies setzt die Existenz nur zweier optischer Frequenzen mit schmaler Linienbreite voraus. Für Dauerstrich-Messungen mit Laserquellen von erheblicher spektraler Reinheit ist diese Annahme gültig; jedoch sind keine räumlich aufgelösten Messungen mit Dauerstrich-Pump- und Stokesstrahlen möglich. Deshalb muss die Auswirkung der sinusförmig modulierten Amplituden der optischen Wellen auf die nichtlineare Wechselwirkung untersucht werden.

Die Amplitudenmodulations-(AM)-Technik, so wie sie in dem BOFDA-System verwendet wird, kann beschrieben werden als die Multiplikation der Amplitude $E_0$ einer (optischen) Trägerwelle bei der Frequenz $\omega_c$ mit einem sinusförmigen Signal der Amplitude $u_m$ und der Frequenz $\omega_m$ (mit $f_m = \omega_m/2\pi$).

Die Modulation wird durch einen LiNbO$_3$-(Lithium-Niobat)-Kristall-Mach-Zehnder-Modulator durchgeführt, wobei der Arbeitspunkt in die lineare Region seiner kosinusförmigen Transfercharakteristik gesetzt wird. Mit der Annahme eines stabilen Arbeitspunkts und eines kleinen Modulationssignals $u_m$, kann die Multiplikation als linear angesehen werden, was zu einer Doppelseitenband-Voll-Träger-Amplitudenmodulation führt:

$$E(t) = E_0 e^{j\omega_c t} \cdot \left(A + u_m \cos(\omega_m t)\right) \qquad (1)$$

wobei A die Trägeramplitude ist. Die Beziehung von A und $u_m$ innerhalb des Modulationsprozesses ist in Figur 3 illustriert.

An diesem Punkt ist es angebracht, den Modulationsindex (oder Modulationstiefe) $m = u_m/A$ einzuführen. Da der Modulationsprozess in Hinblick auf die Intensität des optischen Trägers linear ist, kann die Gleichung (1) auf $E_0$ normiert werden, was zu

$$E(t) = A \cdot m \cdot e^{j\omega_c t}\cos(\omega_m t) + A \cdot e^{j\omega_c t} \qquad (2)$$

Führt, wobei die Multiplikation von Träger und Signal mit Hilfe der trigonometrischen Identität

$$e^{jx} \cdot \cos y = \frac{1}{2}\left(e^{x-y} + e^{x+y}\right) \qquad (3)$$

erweitert werden kann, was zu

$$E(t) = A \cdot e^{j\omega_c t} + \frac{m}{2}A \cdot e^{j(\omega_c - \omega_m)t} + \frac{m}{2}A \cdot e^{j(\omega_c + \omega_m)t} \qquad (4)$$

führt, wobei die spektrale Zusammensetzung des modulierten Signals klar sichtbar wird, welche aus dem Träger mit Amplitude A und den Seitenbändern mit jeweiliger Amplitude m/2 A besteht, welche vom Träger durch $\omega_m$ beabstandet sind. Figur 3 gibt eine schematische Darstellung der Spektrallinien.

Es ist diese spektrale Zusammensetzung, welche in Gleichung (I) mit allen ihren Komponenten eingeht. In der BOFDA-Konfiguration, die überall in der Forschung benutzt wurde, ist der Pumpstrahl durch den Intensitätsmodulator moduliert; sowohl $A_p$ als auch $m_p$ (Trägeramplitude und Modulationsindex für die Pumpwelle) können durch Festsetzen von $u_m$ und des Arbeitspunkts des Geräts angepasst werden.

Die spektralen Komponenten des Stokesstrahls sind komplizierter zu bestimmen: Da das Stokes-Licht in die Faser als stetige Welle tritt, sind in dem ursprünglichen Zustand keine Seitenbänder vorhanden. Sobald Wechselwirkung mit dem modulierten Pumpstrahl auftritt, wird der Stokesstrahl die Intensitätsmodulation des Pumplichts übernehmen. Der Modulationsindex $m_s$ sowie die Amplitude des Trägers $A_s$ repräsentieren dann die Quantität der Wechselwirkung in Abhängigkeit von der Wechselwirkungslänge, relativen Zuständen der Polarisation und der Frequenzverstimmung $\Delta f$ - $f_B$. Die Parameter $m_s$ und $A_s$ sind unbestimmte Größen innerhalb des Messsystems.

Mit dem Frequenzabstand von Gleichung (4) werden die folgenden Bezeichnungen für jeden Punkt des Sweeps der Modulationsfrequenz $\omega_m = 2\pi f_m$ eingeführt:

| | |
|---|---|
| $\omega_{p0}$ | Träger der Pumpwelle |
| $\omega_{p1} = \omega_{p0} - \omega_m$ | unteres Seitenband der Pumpwelle |
| $\omega_{p2} = \omega_{p0} + \omega_m$ | oberes Seitenband der Pumpwelle |
| $\omega_{s0}$ | Träger der Stokeswelle |
| $\omega_{s1} = \omega_{s0} - \omega_m$ | unteres Seitenband der Stokeswelle |
| $\omega_{s2} = \omega_{s0} + \omega_m$ | oberes Seitenband der Stokeswelle |

Für den kompletten Wellenansatz werden die entsprechenden Wellenzahlen für den Pump-Träger und -seitenbänder $k_{p0}$, $k_{p1}$ und $k_{p2}$ und die Stokes-Träger und -seitenbänder $k_{s0}$, $k_{s1}$ und $k_{s2}$ eingeführt. Die Anregung der akustischen Welle wird:

$$\Delta E^2 = \frac{\partial^2}{\partial z^2}\left( E_p A_p \left[ e^{j(k_{p0}z-\omega_{p0}t)} + \frac{m_p}{2}\left( e^{j(k_{p1}z-\omega_{p1}t)} + e^{j(k_{p2}z-\omega_{p2}t)} \right) \right] \right.$$

$$+ E_p^* A_p \left[ e^{-j(k_{p0}z-\omega_{p0}t)} + \frac{m_p}{2}\left( e^{-j(k_{p1}z-\omega_{p1}t)} + e^{-j(k_{p2}z-\omega_{p2}t)} \right) \right] +$$

$$+ E_s A_s \left[ e^{j(-k_{s0}z-\omega_{s0}t)} + \frac{m_s}{2}\left( e^{j(-k_{s1}z-\omega_{s1}t)} + e^{j(-k_{s2}z-\omega_{s2}t)} \right) \right] \tag{5}$$

$$\left. + E_s^* A_s \left[ e^{-j(-k_{s0}z-\omega_{s0}t)} + \frac{m_s}{2}\left( e^{-j(-k_{s1}z-\omega_{s1}t)} + e^{-j(-k_{s2}z-\omega_{s2}t)} \right) \right] \right)^2$$

Die zwölf Summanden leisten einen Beitrag zu einer Summe von 66 Ausdrücken nach Ausmultiplikation des quadratischen Ausdrucks. Die spektrale Verteilung des Intensitäts-Schwebungssignalmusters kann aus diesen Ausdrücken gebildet werden. Alle Ausdrücke, die zum arithmetischen Mittel einen Beitrag liefern - wobei DC-Ausdrücke ohne oszillierende Phasen $|E_p^2|$ und $|E_s^2|$ sind -können vernachlässigt werden.

Die Quadraturprodukte $E_{px}^2 e^{2j(k_{px}z-\omega_{px}t)}$ und $E_{sx}^2 e^{2j(k_{sx}z-\omega_{sx}t)}$ mit x = 0,1,2 haben Frequenzen weit über dem optischen Band und leisten keinen Beitrag zur Einhüllenden des Schwebungssignalmusters; sie werden in den folgenden Überlegungen vernachlässigt werden. Dasselbe gilt für alle Komponenten mit Exponenten $\pm j((k_{px} - k_{sy}) - (\omega_{px} + \omega_{sy}))$ mit x, y = 0, 1, 2, die auch vernachlässigt werden.

Die Frequenzen und Wellenzahlen der verbleibenden Ausdrücke liegen in dem Bereich der Bedingung für Anregung der akustischen Welle, die als Gleichungen formuliert wurden

$$E_p E_s^* A_p A_s \cdot \begin{cases} e^{j((k_{p0}+k_{s0})z-(\omega_{p0}-\omega_{s0})t)} \\[2mm] \dfrac{m_s}{2} \cdot e^{j((k_{p0}+k_{s1})z-(\omega_{p0}-\omega_{s1})t)} \\[2mm] \dfrac{m_s}{2} \cdot e^{j((k_{p0}+k_{s2})z-(\omega_{p0}-\omega_{s2})t)} \\[2mm] \dfrac{m_p}{2} \cdot e^{j((k_{p1}+k_{s0})z-(\omega_{p1}-\omega_{s0})t)} \\[2mm] \dfrac{m_p m_s}{4} \cdot e^{j((k_{p1}+k_{s1})z-(\omega_{p1}-\omega_{s1})t)} \\[2mm] \dfrac{m_p m_s}{4} \cdot e^{j((k_{p1}+k_{s2})z-(\omega_{p1}-\omega_{s2})t)} \\[2mm] \dfrac{m_p}{2} \cdot e^{j((k_{p2}+k_{s0})z-(\omega_{p2}-\omega_{s0})t)} \\[2mm] \dfrac{m_p m_s}{4} \cdot e^{j((k_{p2}+k_{s1})z-(\omega_{p2}-\omega_{s1})t)} \\[2mm] \dfrac{m_p m_s}{4} \cdot e^{j((k_{p2}+k_{s2})z-(\omega_{p2}-\omega_{s2})t)} \end{cases}$$

Diese sind die Frequenzkomponenten, die die Einhüllende des Schwebungssignalmusters bilden. Für den speziellen Fall der Resonanz mit $\Delta f = f_B$ können fünf Frequenzlinien formuliert werden:

$$\omega_{p0} - \omega_{s0} = \omega_{p1} - \omega_{s1} = \omega_{p2} - \omega_{s2} = \omega$$
$$\omega_{p0} - \omega_{s1} = \omega_{p2} - \omega_{s0} = \omega + \omega_m$$
$$\omega_{p0} - \omega_{s2} = \omega_{p1} - \omega_{s0} = \omega - \omega_m \qquad (6)$$
$$\omega_{p2} - \omega_{s1} = \omega + 2\omega_m$$
$$\omega_{p1} - \omega_{s2} = \omega - 2\omega_m$$

Wenn man der Näherung $|\vec{k}| = |\vec{k}_p| + |\vec{k}_s| \approx 2|\vec{k}_p|$ wobei $\Delta f$ im Vergleich zu den optischen Frequenzen klein ist, konsequent folgt, kann angenommen werden, dass $k_{p0} \approx k_{p1} \approx k_{p2} \approx k_{s0} \approx k_{s1} \approx k_{s2} \approx k/2$, was zu den entsprechenden Zuweisungen für die Wellenzahlen führt. Der volle Ausdruck für die Einhüllende, bezeichnet mit einem Aufzählungsindex $\xi$ für jede Spektrallinie, wird zu

$$\Phi_\xi = E_p E_s^* A_p A_s \cdot \begin{cases} \dfrac{m_p m_s}{4} \cdot e^{j(k\cdot z - (\omega - 2\omega_m)t)} & \xi = 1 \\[2ex] \dfrac{m_p + m_s}{2} \cdot e^{j(k\cdot z - (\omega - \omega_m)t)} & \xi = 2 \\[2ex] \left(1 + \dfrac{m_p m_s}{2}\right) \cdot e^{j(k\cdot z - \omega\cdot t)} & \xi = 3 \\[2ex] \dfrac{m_p + m_s}{2} \cdot e^{j(k\cdot z - (\omega + \omega_m)t)} & \xi = 4 \\[2ex] \dfrac{m_p m_s}{4} \cdot e^{j(k\cdot z - (\omega + 2\omega_m)t)} & \xi = 5 \end{cases} \qquad (7)$$

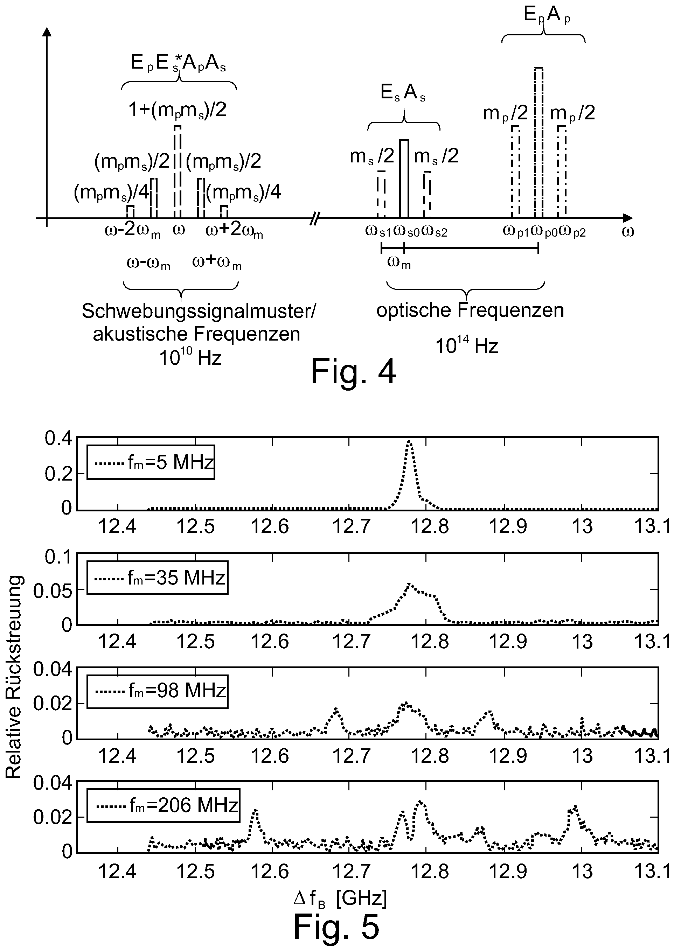

Da die Amplituden von sowohl der Pump- als auch der Stokes-Welle als moduliert angesehen wurde, werden fünf gleich beabstandete Spektrallinien für die Einhüllende des Schwebungssignalmusters erhalten (siehe die Illustration in Fig. 4).

Die zentrale Linie $\Phi_{\xi=3}$ mit Frequenz $\omega$ und Amplitude $1 + m_p m_s/2$ wird durch Veränderungen des Modulationsindex von einer der beiden Wellen wenig beeinflusst. Die zwei Seitenbänder $\Phi_{\xi=2,4}$ bei $\omega \pm \omega_m$ mit Amplituden $(m_p + m_s)/2$ werden von den definierten und konstanten Modulationsindex der Pumpwelle $m_p$ reguliert. Eine Zunahme der ungewissen Stokesmodulation hätte einigen Einfluss auf deren Intensität, da wir jedoch annehmen, dass $E_s \ll E_p$ und $m_s \ll m_p$ ist, kann angenommen werden, dass diese Seitenbänder stets präsent und konstant über die Wechselwirkungslänge sind. Dagegen hängen die äußeren Seitenbänder $\Phi_{\xi=1,5}$ bei $\omega \pm 2\omega_m$ mit Amplituden $m_p m_s/4$ von der Anwesenheit der Brillouin-Wechselwirkung in ihrer bloßen Existenz ab; es wird erwartet, dass sie sehr schwach sind, auch wenn der Stokes-Modulationsindex $m_s$ die Größe von $m_p$ erreicht.

Die Aufspaltung der Einhüllende des Schwebungssignalmusters in fünf Spektrallinien hat eine wesentliche Auswirkung auf Messungen der Brillouin-Verstärkung, tatsächlich können die in Fig. 2 gezeigten Artefakte bis genau zu diesem Phänomen zurückverfolgt werden.

In dem BOFDA-Messaufbau wird die maximale Brillouin-Verstärkung gemessen, wenn die Laserverstimmung $\Delta f$ mit der spezifischen Brillouin-Frequenz $f_B$, welcher Dehnung, Temperatur und Materialparameter der Faser entspricht, übereinstimmt. Wenn es innerhalb der gemessenen Phase mehrere Faserabschnitte mit unterschiedlichen Werten von $f_B$ gibt, wird es mehrere überlagerte Spektren geben, die zu beobachten sind, wenn ein Sweep von $\Delta f$ durchgeführt wird. Jedes der Maxima der Brillouin-Verstärkung entspricht einem Wert von $\Delta f$, welcher zu der Anregung einer akustischen Welle führt.

So eine direkte Umverteilung des gemessenen Verstärkungsmaximums setzt eine einzelne Frequenzkomponente der Einhüllenden für jeden Wert von $\Delta f$ voraus. Jedoch ist dies, wie gerade gezeigt wurde, nicht der Fall, wenn der Pumpstrahl moduliert wird, da drei (wenn wir annehmen, dass die Stokes-Modulation schwach ist) Frequenzkomponenten des Schwebungssignalmusters bereit sind, die akustische Welle anzuregen, was zu stimulierter Rückstreuung führt. Wenn $\Delta f$ durchgefahren wird, wird die Wechselwirkung durch eine Spektrallinie nach der anderen, welche durch jede Resonanzbandbreite entsprechend unterschiedlichen $f_B$ der Faserabschnitte läuft, angeregt werden.

Wenn die tatsächlich existierenden Verstärkungsspektren $g_B$ als Überlagerung von mehreren Lorentz-Profilen

$$g_B(\Delta f - f_B) = g_{B\,\text{max}} \frac{(\Gamma_B/2)^2}{(2\pi(\Delta f - f_B))^2 + (\Gamma_B/2)^2},$$

$$\Gamma_B = \frac{\eta k^2}{\rho_0} = \frac{1}{\tau_B}$$

angesehen, entspricht jedes von ihnen einem gewissen Wert von $f_B$, der an einer beliebigen Stelle entlang der Faser auftaucht. Der Sweep von $\Delta f$ wird durchgeführt, um $g_B$ zu messen, wobei es typischerweise mit dem Anregungspeak gescannt wird. Da die Anregung nicht als Spitze angesehen werden kann, sondern eher als eine Gabel bestehend aus drei Spitzen, muss der Scan formuliert werden als eine Faltung von $g_B$ mit dem Anregungsmuster von Gleichung (7):

$$g'(\Delta f) = g(\Delta f) * \sum \Phi_\xi \qquad (8)$$

mit $\xi$ = 2, 3, 4, wenn die äußeren Spektralkomponenten vernachlässigt werden. Eine Messung besteht aus zwei unabhängigen Sweeps: der Scan von $\Delta f$ und der Modulationssweep $f_m$, was dreidimensionale Daten liefert. Für jeden Wert von $\Delta f$ wird die Transferfunktion $H(\omega_m)$ erhalten. Umverteilung der Resonanzspitzen in der Transferfunktion zur räumlichen Position der Faserabschnitte wird durch die inverse Fourier-Transformation erreicht. Jedoch können bei Werten für $\omega_m$, die die natürliche Linienbreite der Brillouin-Spektren übertreffen, die Spuren für unterschiedliche $\Delta f$ nicht als unabhängig voneinander gesehen werden.

In dem Folgenden werden zwei Messungen an Fasern eines einzelnen Abschnitts von gleichmäßiger Dehnung, Temperatur und Materialparametern präsentiert. Entsprechend dem Prinzip der Frequenzbereichsanalyse werden sowohl die Pumpmodulationsfrequenz $f_m$ als auch der Laserfrequenz-Offset $\Delta f$ durchgefahren und die komplexe Transferfunktion für jedes $\Delta f$ aufgezeichnet. Für solch eine homogene Faser wird ein einzelnes Brillouin-Verstärkungsspektrum um $\Delta f$ = 12,79 GHz erwartet mit einer zu höheren Modulationsfrequenzen abnehmenden Intensität.

Von der ersten Messung, welche an einer Faser einer Länge von 4400 m durchgeführt wurde, werden Querschnitte der Brillouin-Verstärkungsspektren in Fig. 5 gezeigt. Im Gegensatz zum erwarteten Verstärkungsspektrum mit einem einzelnen Zentrum, zeigt Fig. 5 die Artefakte, welche von der Faltung mit der Anregung mit drei Spitzen von Gleichung (8) herrühren: Brillouin Wechselwirkung wird nicht nur für $\Delta f = f_B$ angeregt, sondern jederzeit, wenn eine der Spektrallinien des Schwebungssignalmusters die Resonanzfläche betritt, was bei $\Delta f = f_B - f_m$ sowie $\Delta f = f_B + f_m$ passiert. Als Folge treten aus den eigentlich vorhandenen Brillouin-Verstärkungsspektren Phantomverstärkungsspektren bei einem bestimmten Abstand auf, welcher, der Modulationsfrequenz $f_m$ entspricht.

In solch einer Messung einer homogenen gedehnten Faser ist keine Wechselwirkung bei den spektralen Orten der äußeren Schwebungssignalkomponenten $\Phi_{\xi=1,5}$ mit $f_B \pm 2f_m$ bestimmbar. Diese Komponenten werden nur auftauchen, wenn irgendeine Brillouin-Wechselwirkung mit einer der existierenden spektralen Komponenten $\xi$ = 2, 3, 4 bereits passiert. Folglich benötigt messbare Brillouin-Streuung aufgrund der äußeren Seitenbänder die Anwesenheit von Faserabschnitten mit $f_B$-Werten, welche einer von den drei zentralen Komponenten entspricht, um $m_s > 0$ zu initiieren, und gleichzeitig einen gewissen Faserabschnitt mit $f_B$, welches den äußeren Seitenbändern entspricht. Deshalb werden bei einem Sweep von $f_m$, auch in dem Fall von mehrfachen Faserabschnitten mit zufällig verteilten Werten für $f_B$, die äußeren Spektrallinien mit stetig aufkommenden Phantomspektren bei $f_B \pm 2f_m$ nichts beitragen; sie werden eher sporadische Erscheinungen bei Niveaus mit niedrigen Intensitäten zeigen, welche als Rauschen aufgefasst werden.

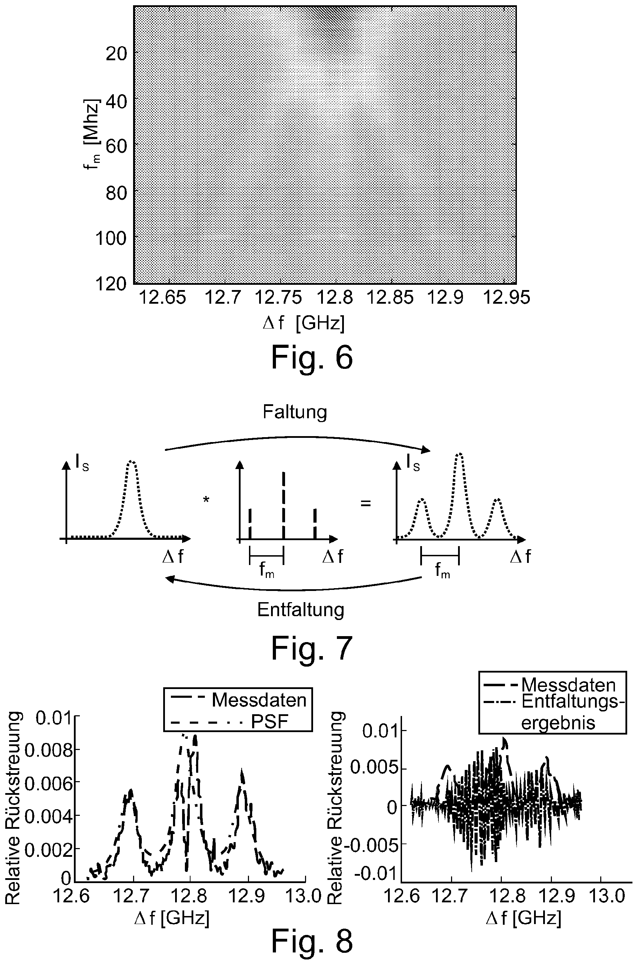

Figur 6 zeigt die zweite dieser Messungen: eine 2200 m lange Faser mit homogener Temperatur und Dehnung, wo keine lokalen Änderungen von $f_B$ vorhanden sind. Die Messspur zeigt eine logarithmische Darstellung der Transferfunktionen mit einem Überstreichbereich von $f_m$ von 40 kHz bis 120 MHz.

Eine quantitativere Analyse der in Fig. 6 gezeigten Messung wird durchgeführt, um die Übereinstimmung der gemessenen Form der Spektren mit der theoretisch vorhergesagten Wechselwirkung zu untersuchen. Zu diesem Zweck müssen die Parameter der Amplitudenmodulation des Pumpstrahls berücksichtigt werden. Der LiNbO$_3$-Modulator wird von der Signalquelle des Vektor-Netzwerk-Analysators (VNA) bei einer maximalen Signalstärke von 15 dBm betrieben, was ein Signal mit einer Spitze-Spitze-Spannung von 3,55 V an den Elektroden des Mach-Zehnder-Elements bereitstellt. Diese Antriebsspannung liegt gut unter dem $V_\Pi$ des Modulators und gewährleistet deshalb ungefähr linearen Betrieb. Für das an einen Photodetektor beobachtete modulierte Signal können die derzeitigen optischen AM-Parameter mit einem Oszilloskop oder Spektralanalysator hergeleitet werden, was einen Offset von $A_p$ = 0,6 V bei einer optischen Leistung liefert, die ein Spitze-Spitze-Signal von $u_p$ = 0,46 V am Ausgang des internen Verstärkers des Fotodetektors ergibt. Der Modulationsindex des Pumpsignals wird $m_p$ = 0,77.

Ein mittlerer Wert für das Verhältnis der Intensitäten von zentralen und Phantom-Spektren kann von der in Fig. 6 gezeigten Messung gezogen werden. Zwischen $f_m$ = 50 MHz und $f_m$ = 120 MHz, der Region, wo die Phantom-Spektren von dem zentralen Spektrum unterscheidbar sind, wird ein mittleres Verhältnis zwischen dem vom unteren Seitenband angeregten Phantom und dem zentralen Spektrum von 0,59 gemessen, für das Spektrum, welches vom oberen Seitenband angeregt wird, ist es 0,61. Mit dem Verhältnis der spektralen Intensitäten der Phantomspektren zum zentralen Spektrum von Gleichung (7), welches

$$\frac{\Phi_{\xi=2,4}}{\Phi_{\xi=3}} = \frac{(m_p + m_s)/2}{1 + (m_p \cdot m_s)/2}$$

ist, findet man, dass mit einem angenommenen Modulationsindex $m_s$ = 0,77, was der für $m_p$ gemessene Wert ist, das aus den gemessenen Phantomspektren gezogene Intensitätsverhältnis, bestätigt werden kann. Die Gleichheit der zwei Modulationsindices (Werte, welche nicht von dem Verhältnis der absoluten optischen Intensitäten beeinflusst werden) gibt eine volle Modulation der Stokes-Intensität im Falle der Resonanz-Brillouin-Wechselwirkung an.

Mit den Phantomspektren, welche bei einem definierten Abstand von den physikalisch relevanten Verstärkungsspektren auftreten, wird die Auswirkung des modulierten Pumpsignals auf die gemessene Transferfunktion analytisch verständlich und vorhersagbar. Für das Endergebnis der verteilten Messung, der räumlich aufgelösten Brillouin-Verstärkungsverteilung, welche von der Transferfunktion durch die IFFT gezogen wurde, ist dies nicht der Fall. Jeder räumliche Punkt wird von der gesamten Transferfunktion rekonstruiert, d.h. jeder Probenpunkt von $f_m$ kann zu jedem Punkt in der räumlich aufgelösten Spur beitragen. Das Ergebnis dieser fehlerbehafteten Rekonstruktion, bei der die Phantomspektren genauso wie die physikalisch relevanten Spektren beitragen, wurde in Fig. 2 gezeigt.

Die höheren Modulationsfrequenzen verbessern die räumliche Auflösung, aber sie sind auch für eine gewisse Verbreiterung der räumlich aufgelösten Verstärkungsspektren verantwortlich. Naturgemäß werden Artefakte bei Abschnitten mit schnellen Veränderungen von $f_B$ stärker, da diese einer spektralen Darstellung mit einem größeren Anteil von hohen Frequenzen in der Transferfunktion entsprechen.

Die spektrale Verbreiterung, die Messungen mit hohen Modulationsfrequenzen inhärent ist, bildet die Unschärferelation, die die Leistung des Messsystems beschränkt: hohe räumliche Auflösung benötigt hohe Modulationsfrequenzen, welche wiederum die Artefakte erzeugen, die entlang der Faser die Genauigkeit der Bestimmung von $f_B$ und dadurch Dehnung und Temperatur reduzieren.

Der Wert der vorangehenden Analyse tritt zu Tage, wenn Erwägungen über eine Art und Weise, Beschränkungen die räumliche Auflösung zu überwinden, begonnen werden. Obwohl die Auswirkung auf das Messsignal letztendlich sowohl für BOTDA- als auch BOFDA-Messungen dasselbe ist, bietet die Unterscheidung im Ursprung der Artefakte unterschiedliche Ansätze, um sie zu korrigieren oder zu vermeiden.

Die Beschränkungen der räumlichen Auflösung, welche allen Brillouin-Messsystemen zu eigen ist, zu überwinden, ist eine Aufgabe, der man sich generell in zwei Weisen nähern kann: Entweder kann man versuchen die Artefakte, die die Messung verschlechtern, soweit wie möglich zu vermeiden - oder ihr Auftauchen muss akzeptiert werden, in welchem Fall eine nachfolgende Korrektur oder Rekonstruktion versucht werden müsste.

Während des Prozesses der Untersuchung des BOFDA-Systems schien die Vermeidung der Artefakte kein Erfolg versprechender Weg zu sein; wie in der Analyse des Problems gezeigt wurde, ist ihr Erscheinen eng mit der bloßen Existenz von moduliertem Licht innerhalb der Brillouin-Wechselwirkung, welche die zentrale Säule der Messtechnik bildet, verknüpft.

Um einen Ansatz für eine Korrektur der verschlechterten Messspuren zu finden, bietet die Frequenzbereichtechnik einen Ansatzpunkt, die Impulsreflektometrie nicht bietet. Der Schlüssel ist die Faltung von Gleichung (8): Für jeden Wert von $f_m$, regt der Sweep von $\Delta f$ nicht ein Lorentz-Spektrum für jeden $f_B$-Wert, sondern ein charakteristisches Muster von drei durch $f_m$ beabstandete Spektren an. Mit dem Wissen der spektralen Form der Einhüllenden der Schwebungssignalmusters (formuliert in Gleichung (7)), wird das Muster, das sich aus der Faltung von jedem existierenden Verstärkungsspektrum ergeben wird, bestimmt und kann vorhergesagt werden. Jede Brillouinverschiebung $f_B$, die in der Faser vorhanden ist, wird einem Muster mit drei Spitzen in der Messtransferfunktion (das Messergebnis vor der IFFT) entsprechen, welche gemäß $f_m$ geformt ist. Nach Transformation der Transferfunktion in die Impulsantwort, ist diese klare Umverteilung verloren, was bei der BOTDA-Technik die Situation genau nach der Datenerfassung ist.

Deshalb könnte die getrennte Messung der Frequenzkomponenten, welche danach durch die IFFT zur Impulsantwort rekombiniert werden, eine getrennte Rekonstruktion der Verstärkungsspektren für jeden Sweep-Wert von $f_m$ ermöglichen. Von Gleichung (8) muss das eigentliche Verstärkungsspektrum g ($\Delta f$) wieder gewonnen werden; das gemessene Spektrum g'($\Delta f$) ist bereits verfügbar und die Spektralkomponenten $\Phi_\xi$ wurden hergeleitet (mit einer Ungewissheit in Bezug auf die Auswirkung der Modulation des Stokes-Strahls und die Anwesenheit der äußeren Komponenten $\Phi_{\xi=1,5}$). Folglich wird eine einer inversen Faltung entsprechende Operation die ursprünglichen Brillouin-Verstärkungsspektren g($\Delta f$) für jeden Sweep-Wert von $f_m$ rekonstruieren. Der Ansatz ist in Fig. 7 illustriert.

In den Messdaten wird ein definiertes Muster für jeden Wert von $f_m$ entlang der Achse von $\Delta f$ gesucht; in der Standardprozedur ist dies eine Lorentz-Funktion mit einer FWHM der Brillouin-Linienbreite, da bekannt ist, dass jede existierende Brillouin-Verschiebung $f_B$ ein lorentzförmiges Spektrum in die Messspur induziert. Dieses Muster wird nun zu der komplizierteren Form des Spektrums mit drei Spitzen erweitert, welches für jeden Sweepwert von $f_m$ definiert ist. Für $f_m << 1/\tau_B$, d.h. solange die Modulationsfrequenz weit unter der Linien der Brillouin-Linienbreite bleibt, geht das Drei-Spitzen-Muster in das Einzel-Lorentz-Spektrum über, welches in der Standardprozedur gesucht wird.

Die in Fig. 6 gezeigte Messung illustriert die Idee des Ansatzes: Wenn für jeden Wert von $f_m$ (vertikale Achsen) die drei Spitzen zur zentralen Spitze umverteilt werden, wird Rekonstruktion von g($\Delta f$) erreicht; die Transferfunktion besteht dann aus einem einzelnen Lorentz-Spektrum für jedes $f_B$ und $f_m$, wodurch das Muster, welches durch Phantomspektren verschlechtert wurde, ersetzt wird. Naturgemäß zeigt die Messung von Fig. 6 nicht den realen Fall der verteilten Erfassung, wie er an einer eindeutig homogenen Faser durchgeführt wurde. In einer Faser, welche eine beliebige Verteilung von Abschnitten mit unterschiedlichen $f_B$ beinhaltet, wird für jeden Wert von $f_m$ eine Überlagerung von mehreren Faltungsmustern gemessen werden; ihre Umverteilung zu den physikalischen Verstärkungsspektren g($\Delta f$) wird nicht durch visuelle Bestimmung handhabbar sein.

An diesem Punkt wird auf die Bearbeitung von Digitalbildern Bezug genommen. Jedes aufgenommene Bild wird sowohl von stochastischen Störungen (Rauschen) und systematischen Fehlern getrübt, wobei die letzteren zum Beispiel durch physikalische Eigenschaften der Linsen oder Inhomogenitäten des aufnehmenden Mediums (der fotografische Film oder elektronische Sensor) verursacht werden. Bildverschlechterung durch solche systematischen Fehler kann durch die Faltung

$$g'(x,y) = g(x,y) * d(x,y) + \eta(x,y) \qquad (9)$$

formuliert werden, wobei g(x,y) das unversehrte Bild, g'(x,y) das verschlechterte Bild, d(x,y) die Verschlechterungsfunktion, welche alle systematischen Fehler darstellt und η(x,y) zusätzliches Rauschen ist. Bei der digitalen Bildverarbeitung wird die Verschlechterungsfunktion d(x,y) normalerweise als die Punktverteilungsfunktion (PSF) bezeichnet, da sie die Antwort des Bildaufnahmesystems für jeden aufgenommenen Punkt in zwei Dimensionen darstellt. In dem Fall der Brillouin-Erfassung wird das Problem auf eine Dimension (der Δf-Sweep anstatt von x,y) reduziert.

Da sich eine Faltung nach Fourier-Transformation in eine einfache Multiplikation verwandelt, wird die Beziehung in den Bereich einer geometrischen Frequenz v transformiert und wird

$$G'(v) = G(v)D(v) + N(v) \qquad (10)$$

und kann zu G(v) transponiert werden, um ein wiederhergestelltes (inverse gefaltetes) Signal G"(v):

$$G''(v) = G(v) + \frac{N(v)}{D(v)} = \frac{G'(v)}{D(v)} \qquad (11)$$

zu erhalten. Einem einfachen Ansatz folgend, bildet Gleichung (11) eine vollständige Rekonstruktionsrichtlinie für die Brillouin-Verstärkungsspektren, welche durch Phantomspektren verschlechtert sind. Da die PSF d(Δf) innerhalb den Unsicherheiten betreffend die Modulation des Stokes-Lichts bekannt ist, kann inverse Faltung durchgeführt werden durch Ausführen von (11) und Durchführen einer inversen Fourier-Transformation von G"(v) zurück in den Bereich von Δf.

Unglücklicherweise gibt es zwei kritische Punkte bei diesem Ansatz: Erstens könnte D(v) Nullen enthalten, was Singularitäten in das Resultat der Division einbringen würde. Das zweite Problem ist die Existenz von stochastischem Rauschen, welches in dem rekonstruierten Spektrum G"(v) noch vorhanden sein wird. Darüber hinaus wird dieses Rauschen bis zu einem extremen Ausmaß durch die unvermeidbare Division durch D(v) verstärkt werden, welches eine Funktion ist, welche zu hohen Werten der geometrischen Frequenz v abnimmt. Wenn die Operation in Gleichung (9) als eine Tiefpassfilterung von g(x,y) angesehen wird, dann muss (11) als ein Hochpass angesehen werden, welcher η bei hohen v aufbläht.

Wenn man die Messspur entlang der Dimension von Δf berücksichtigt, sind es die Beträge der komplexen Daten, welche die Brillouin-Verstärkungsspektren mit ihren charakteristischen Mustern von Lorentz-Kurven bilden, wobei tatsächliche und Phantomspektren überlagert sind; deshalb wurde die Verschlechterung durch Faltung (und die entsprechende PSF) als eine Analyse der komplexen Beträge formuliert. Wenn die Daten entlang der Dimension von $f_m$, welche die komplexen Transferfunktionen $H(j\omega)|_{\Delta f}$ bilden, berücksichtigt werden, stellt sich die Frage, welche Wirkung der Wiederherstellungsprozess auf die Phaseninformation haben wird. Diese Komponente der Messdaten ist entscheidend zum Umverteilen der räumlichen Information innerhalb der Impulsantwort, ob die dreidimensionalen Daten entlang Δf und $f_m$ in kartesischen oder Polarkoordinaten dargestellt werden.

Wenn der Wiederherstellungsprozess als eine Zuweisung von Gewichten zu den Messpunkten angesehen wird, d.h. die Suche nach einer Gewichtungsfunktion q = |g"|/|g'|, die die Phantomspektren für jedes $f_m$ eliminiert, wird klar, dass die Phaseninformation durch die Entfaltungsprozedur nicht beeinträchtigt wird. Da die Gewichtung durch q linear ist, hat ihre Anwendung eine einfache Auswirkung auf den realen und imaginären Teil:

$$|g''| = q \cdot |g'| = \sqrt{(q \cdot \mathrm{Re}(g'))^2 + (q \cdot \mathrm{Im}(g'))^2} \qquad (12)$$

Konsequenterweise kann die Gewichtungsfunktion q, sobald sie für die Beträge erhalten wurde, auf die Real- und Imaginärteile der Messdaten g' angewendet werden. Von diesen Spuren in kartesischer Darstellung können die Polardaten (natürlich mit dem Betrag |g"|) mit der adäquaten Phaseninformation, welche in die inverse Fourier-Transformation einzufügen ist, was die räumlich aufgelöste Impulsantwort liefert, erhalten werden. Diese Abwägungen mögen als eine kaum elegante Prozedur erscheinen, aber sie befreien die Entfaltung von der Voraussetzung, nur lineare Operationen zu enthalten.

Um Effekte der Entfaltung zu demonstrieren, wird ein Querschnitt der Messung von Fig. 6 bei 99,2 MHz genommen. Die PSF wird gemäß dem oben beschriebenen Ansatz rekonstruiert, mit drei Lorentz-Spektren, welche durch $f_m$ beabstandet sind; die Höhe der zwei Seitenspektren relativ zum zentralen Spektrum wird auf 0,6 eingestellt.

Die Messdaten mit ihren zentralen Lorentz-Spektrum, welches dem eigentlichen Wert für $f_B$ der ungedehnten Faser entspricht, und die zwei Phantomspektren zusammen mit dem PSF werden auf der linken Seite von Fig. 8 gezeigt.

Das Ergebnis der naiven Entfaltung durch einfaches Dividieren der Fourier-Transformierten der Messdaten und der PSF ist auf der rechten Seite von Fig. 8 gezeigt. Offensichtlich gehen die Brillouin-Verstärkungsspektren vollständig in dem Rauschen unter, welches extrem verstärkt wurde, wie von Gleichung (11) vorhergesagt.

Eine der ältesten Verfahren der Bildwiederherstellung, welches nach einer Abschätzung g" des unversehrten Bildes g durch Ausführen der Entfaltung einer Punktverteilungsfunktion von einem verschlechterten Bild g' strebt, ist die Wiener-Entfaltungstechnik. Sie führt eine Abschätzung des Signal-zu-Rausch-Verhältnisses $S_\eta/S_g$ des verschlechterten Bildes ein, welches das Leistungsspektrum des Rauschens dividiert durch das Leistungsspektrum des unversehrten Bildes ist. Für die Wiederherstellung der Brillouin-Verstärkungsspektren wird die Abschätzung g", die die statistische Fehlerfunktion

$$e^2 = E\left(\left(g(\Delta f) - g''(\Delta f)\right)^2\right) \qquad (13)$$

minimiert, wiederum in dem Bereich der geometrischen Frequenz v erhalten:

$$G''(v) = \left(\frac{1}{D(v)} \cdot \frac{|D(v)|^2}{|D(v)|^2 + S_\eta(v)/S_g(v)}\right) G'(v) \qquad (14)$$

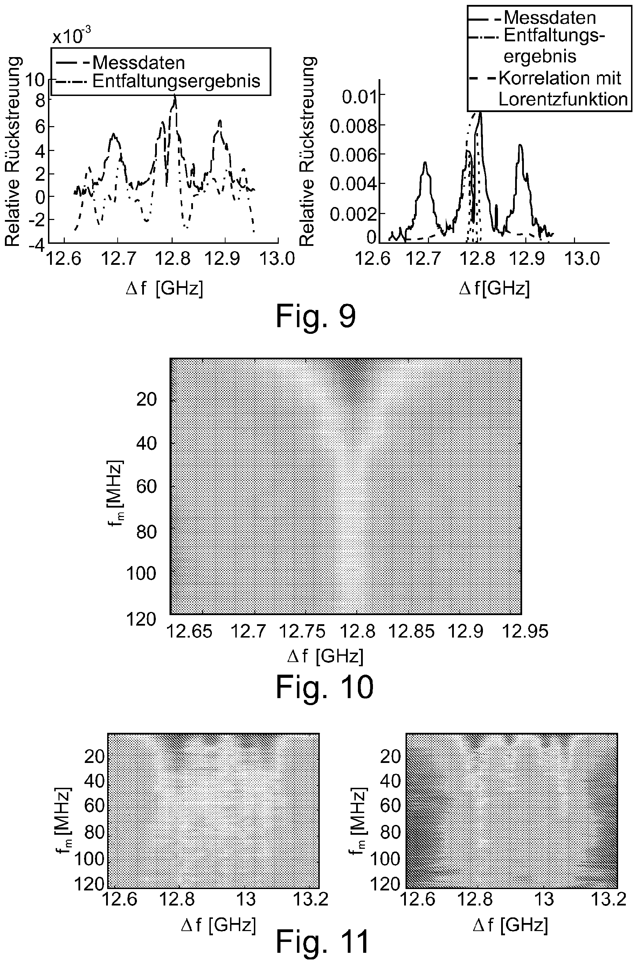

Eine Implementierung des Wiener Algorithmus ist bereits verfügbar, z.B. in der MATLAB-Software. Das Hauptproblem bei der Verwendung dieses Algorithmus zur Wiederherstellung ist der Mangel an Wissen über das Signal-zu-Rausch-Verhältnis des verschlechterten Bilds. Wenn man annimmt, dass $S_\eta(v)/S_g(v)$ konstant gegenüber v ist, kann die Implementierung benutzt werden, wobei interaktiv mit Skalarwerten für die Rauschauswirkung experimentiert wird. Das wird nicht zu einer analytisch soliden Lösung führen, aber stellt eine sinnvolle Art und Weise dar, die Machbarkeit und Begrenzung der Methode abzuschätzen. Das Ergebnis von einer iterativen Benutzung der Wiener-Entfaltung ist in dem Graphen auf der linken Seite von Fig. 9 gezeigt. Das Maximum der Kurve ist am Anfang erst einmal definitiv am Zentrum des drei-Spitzen-Musters gelegen, welches von der Datenspur zu erkennen war.

Im Gegensatz zur einfachen Division im Frequenzbereich und zur Wiener-Entfaltung, welches beide lineare Operationen sind, wurde in den frühen 1970ern ein nicht linearer iterativer Ansatz zur Bildwiederherstellung präsentiert, welcher als Lucy-Richardson-Algorithmus bekannt ist. Der Algorithmus basiert auf iterativen Maximalwahrscheinlichkeitsprozeduren, um Konvergenz des Ausdrucks

$$g''_{k+1}(\Delta f) = g''_k(\Delta f)\left(d(-\Delta f) * \frac{g'(\Delta f)}{d(\Delta f) g''_k(\Delta f)}\right) \qquad (15)$$

zu suchen, unter der Voraussetzung, dass das Bild mit Poisson-Statistik modelliert werden kann.

In der verfügbaren Implementierung sind Eingabeparameter des Algorithmus das verschlechterte Bild, die Punktverteilungsfunktion, die Anzahl der auszuführenden Iterationen und ein Schwellenparameter der Intensität für jeden Datenpunkt, unter dem Dämpfung auftritt (um Rauscherzeugung bei einzelnen Datenpunkten zu unterdrücken). Als Konsequenz der Einführung einer solchen Schwelle, wird das Ergebnis durch schmale Linien entlang der $\Delta f$-Achse gebildet, welche an Positionen gelegen sind, wo die Muster der PSF, die drei Lorentz-Spektren mit Abstand $f_m$, innerhalb der Daten erkannt werden. Ein solches Ergebnis, welches von der Messung der 2200 m gleichmäßig gedehnten Faser erhalten wurde, ist in Fig. 9 gezeigt.

Man kann sehen, dass die drei Spitzen des aufgenommenen Verstärkungsspektrums als ein einziger Fall des Musters, welches durch die PSF gebildet wird (in zwei Spitzen geteilt wegen der Lücke in der ursprünglichen Messung), erkannt werden kann. Wenn das Ergebnis der Entfaltung mit einer lorentzförmigen Glättungskurve korreliert ist, wird ein einzelnes Verstärkungsspektrum mit seinem Maximum bei $\Delta f = f_B$ erhalten. Das Ergebnis der Wiederherstellung der kompletten Transferfunktion (Lucy-Richardson-Algorithmus angewandt auf jede Datenspur g'($\Delta f$) für jedes $f_m$) ist in Fig. 10 gezeigt. Verglichen mit der ursprünglich aufgenommenen Messung (siehe Fig. 6), kann man sehen, dass die Phantomspektren signifikant unterdrückt sind; die Lorentz-Muster mit drei Spitzen wurden zu den zentralen Spektren bei $f_B$ = 12,79 GHz rekombiniert.

Da das Verfahren zur Wiederherstellung der Brillouin-Verstärkungsspektren entwickelt wurde, um die Verbesserung der räumlichen Auflösung ohne Beschränkung der Dehnungsauflösung zu erlauben, wird eine Auswertung des Verfahrens mit einer Messung des definierten Dehnungsprofils durchgeführt. Im Gegensatz zu Messungen von homogen gedehnten Fasern, wo die Güte der Wiederherstellung durch visuelles Vergleichen von graphischen Darstellungen der ursprünglichen und entfalteten Daten beurteilt werden kann, wird es für Realmessungsverfolgungen komplizierter. Wenn eine Faser mit Abschnitten unterschiedlicher Dehnungswerte im Frequenzbereich gemessen wird, wird die Spur $g'(\Delta f)$ für jedes $f_m$ aus der Überlagerung von mehreren Trippeln von Lorentz-Kurven bestehen mit einem zentralen Brillouin-Spektrum beziehungsweise zwei Phantomspektren. Die Aufgabe eines jeden Wiederherstellungsalgorithmus ist es nun, die Ursprünge dieser Muster durch Entfaltung zu lokalisieren und sie zu einem Spektrum zu rekombinieren, als wäre es mit Dauerstrich-Anregung gemessen worden.

In den nachfolgenden Figuren werden Schritte zur Signalverarbeitung, welche durchgeführt werden, um das räumlich aufgelöste Dehnungsprofil von Frequenzbereichsdaten zu erhalten, durchgeführt, einschließlich der Anwendung des Lucy-Richardson-Algorithmus. Figur 11 zeigt den Betrag der Transferfunktion $|H(j\omega)|$ mit dem aufgenommenen Verstärkungsspektrum $g'(\Delta f, f_m)$. Im Graph rechterhand wurde die Entfaltung angewandt; man kann in einigen Abschnitten des Graphs sichtbar beobachten, dass das charakteristische Muster der Phantomspektren, welches bei einem bestimmten Winkel der ursprünglichen Spektren zu höheren Werten von $f_m$ auftritt, durch die Wiederherstellungsprozedur eliminiert werden kann. Trotzdem ist dies kein Beweis dafür, dass die intrinsisch überlagerten Muster korrekt detektiert und umverteilt wurden.

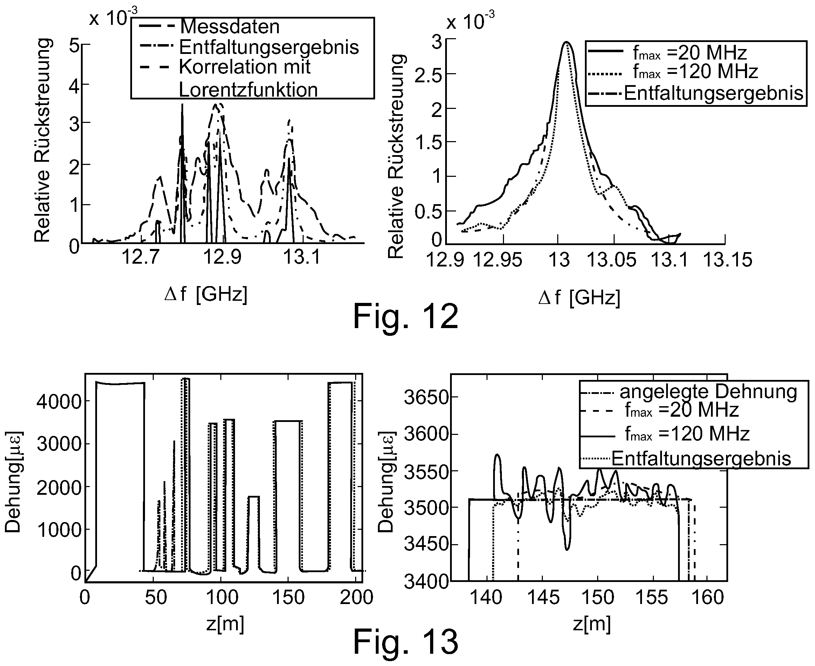

Dasselbe passt für die graphische Darstellung linkerhand in Fig. 12, welche einen Querschnitt von Fig. 11 bei $f_m$ = 62,8 MHz zeigt. Größere Erkenntnis kann vom Graph rechterhand in Fig. 12 gezogen werden, in dem die inverse Fourier-Transformation der komplexen Transferfunktion in die räumliche Impulsantwort für jede Spur entlang $\Delta f$ durchgeführt wurde.

Hier können die Artefakte, welche bei hohen räumlichen Frequenzen auftreten, noch einmal gesehen werden; sie wurden am Beginn dieses Kapitels eingeführt und wurden auf die Anwesenheit der Phantomspektren zurückgeführt. Nun wird, da die Phantomspektren vermutlich eliminiert sind, das Ergebnis des Wiederherstellungsprozesses gezeigt. Die Verbreiterung der Brillouin-Verstärkungsspektren wurde in der Tat vermieden (seine spektrale Breite wird nun durch die Lorentz-Funktion bestimmt, die zur Glättung durch Korrelation benutzt wurde, siehe graphische Darstellung rechterhand in Fig. 12). Die Artefakte konnten teilweise überwunden werden - teilweise sind, wie in diesem Graph auf dem Anstieg der höheren $\Delta f$, Reste der Artefakte noch vorhanden.

Wenn nun die letztendliche Analyse der Daten durchgeführt wird - der Transfer von den dreidimensionalen Daten der Brillouin-Verstärkungsspektren zur Darstellung der Dehnung gegenüber Faserlänge - kann die Güte der Wiederherstellungsprozedur in dieser Phase der Forschung ausgewertet werden. Das Ergebnis ist in der Zeichnung rechterhand gezeigt, welche in einen der Faserabschnitte mit hoher Dehnung heran zoomt: Die verrauschte Messung mit $f_{max}$ = 120 MHz ist durch den Wiederherstellungsprozess deutlich geglättet, was eine signifikant höhere Genauigkeit der Dehnungsmessung liefert. Zur selben Zeit bleibt die räumliche Genauigkeit so gut wie sie von der gewählten Modulationsbandbreite erwartet werden kann, wie in der graphischen Darstellung linkerhand zu sehen ist. Wenn die Kanten zwischen den Abschnitten unterschiedlicher Dehnung angeschaut werden, kann die räumliche Auflösung der wiederhergestellten Spur so hoch und akkurat wie von der ursprünglichen Messung angesehen werden.

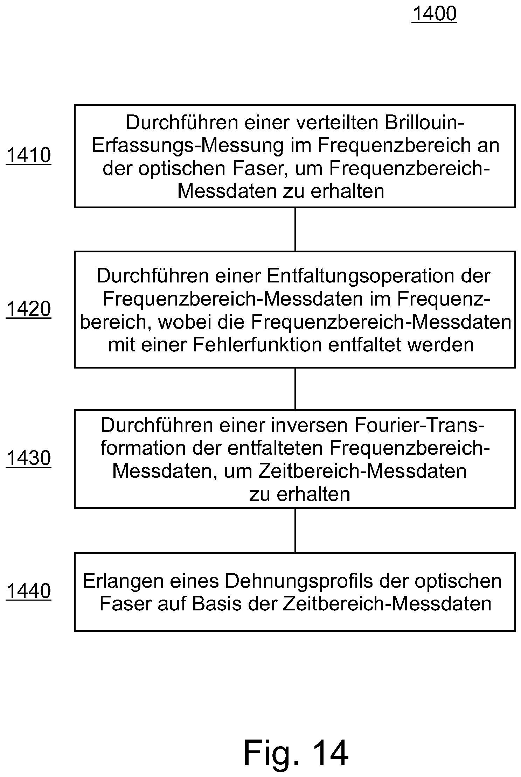

Fig. 14 zeigt ein Flussdiagram zum Zusammenfassen des allgemeinen Verfahrens 1400 nach Ausführungsformen der vorliegenden Erfindung. Darin schließt das Verfahren 1400 ein erstes Feld 1410 ein, in dem eine verteilte Brillouin-Erfassungsmessung im Frequenzbereich an der optischen Faser durchgeführt wird, um Frequenzbereich-Messdaten zu erhalten. In einem nächsten Feld 1420 wird eine Entfaltungsoperation im Frequenzbereich an den Frequenzbereichsmessdaten durchgeführt, wobei die Frequenzbereichsmessdaten mit einer Fehlerfunktion entfaltet werden. In einem nächsten Feld 1430 wird eine inverse Fourier-Transformation, typischerweise eine IFFT an den entfalteten Frequenzbereich-Messdaten durchgeführt, um Zeitbereichsmessdaten zu erhalten. In einem letzten Feld 1440 wird ein Dehnungsprofil der optischen Faser auf Basis der Zeitbereich-Messdaten erhalten. Typischerweise wird die Fehlerfunktion auf Basis der Überlagerung eines Pumpsignals eines Pumplaser und eines Stokes-Signals eines Stokes-Lasers bestimmt. Zum Beispiel kann die Fehlerfunktion alleine auf Basis der Modulationsparameter des Pumpsignals eines Pumplasers und eines Stokes-Signals eines Stokes-Lasers bestimmt werden. Gemäß anderen Ausführungsformen kann die Entfaltung durch den Wiener-Algorithmus oder den Lucy-Richardson-Algorithmus durchgeführt werden. Die Verfahren nach Ausführungsformen der vorliegenden Erfindung können zur Bauwerksüberwachung, insbesondere Überwachung von ausgedehnten Strukturen wie Deichen, Brücken, Eisenbahnbetten, Straßen oder dergleichen, benutzt werden.

Diese schriftliche Beschreibung benutzt Beispiele, einschließlich der besten Ausführungsform, um jeden Fachmann in die Lage zu versetzen, den beschriebenen Gegenstand herzustellen und zu benutzen. Während vorangehend einige spezifische Ausführungsformen offenbart wurden, werden Fachleute verstehen, dass der Geist und Umfang der Ansprüche ebenso effektive Modifikationen zulässt. Insbesondere können sich gegenseitig nicht ausschließende Merkmale der oben beschriebenen Ausführungsformen miteinander kombiniert werden. Der patentierbare Schutzbereich wird durch die Ansprüche definiert und kann solche Modifikationen und andere Beispiele umfassen.

**Patentansprüche**

1. Verfahren zum Bestimmen eines Dehnungsprofils in einer optischen Faser, umfassend

   (a) Durchführen einer verteilten Brillouin-Erfassungs-Messung im Frequenzbereich an der optischen Faser, um Frequenzbereich-Messdaten zu erhalten;
   (b) Durchführen einer Entfaltungsoperation der Frequenzbereich-Messdaten im Frequenzbereich, wobei die Frequenzbereich-Messdaten mit einer Fehlerfunktion entfaltet werden;
   (c) Durchführen einer inversen Fourier-Transformation der entfalteten Frequenzbereich-Messdaten, um Zeitbereich-Messdaten zu erhalten; und
   (d) Erhalten eines Dehnungsprofils der optischen Faser auf Basis der Zeitbereich-Messdaten.

2. Verfahren des Anspruchs 1, wobei die Fehlerfunktion auf Basis der Überlagerung eines Pumpsignals eines Pumplasers und eines Stokessignals eines Stokeslasers bestimmt wird.

3. Verfahren des Anspruchs 1 oder 2, wobei die Fehlerfunktion auf Basis der Modulationsparameter des Pumpsignals eines Pumplasers und eines Stokessignals eines Stokeslasers bestimmt wird.

4. Verfahren des Anspruchs 3, wobei die Fehlerfunktion lediglich auf Basis der Modulationsparameter bestimmt wird.

5. Verfahren eines der vorhergehenden Ansprüche, wobei die Fehlerfunktion eine lineare Überlagerung der Funktionen $\Phi_\xi$ gegeben durch:

$$\Phi_\xi = E_p E_s^* A_p A_s \cdot \begin{cases} \dfrac{m_p m_s}{4} \cdot e^{j(k \cdot z - (\omega - 2\omega_m)t)} & \xi = 1 \\[2mm] \dfrac{m_p + m_s}{2} \cdot e^{j(k \cdot z - (\omega - \omega_m)t)} & \xi = 2 \\[2mm] \left(1 + \dfrac{m_p m_s}{2}\right) \cdot e^{j(k \cdot z - \omega \cdot t)} & \xi = 3 \\[2mm] \dfrac{m_p + m_s}{2} \cdot e^{j(k \cdot z - (\omega + \omega_m)t)} & \xi = 4 \\[2mm] \dfrac{m_p m_s}{4} \cdot e^{j(k \cdot z - (\omega + 2\omega_m)t)} & \xi = 5 \end{cases}$$

   ist,
   wobei $E_p$ die elektrische Feldstärke der Pumpwelle ist, $A_p$ die Amplitude der Pumpwelle ist, $m_p$ der Modulationsindex der Pumpwelle ist, $E_s^*$ die konjugiertekomplexe elektrische Feldstärke der Stokeswelle ist, $A_s$ die Amplitude der Stokeswelle ist, $m_s$ der Modulationsindex der Stokeswelle ist, und $\omega_m$ die Modulationsfrequenz ist.

6. Verfahren des Anspruchs 5, wobei die Fehlerfunktion durch eine lineare Überlagerung von $\Phi_\xi$ mit $\xi$ = 2, 3, 4 bestimmt wird.

7. Verfahren nach einem der vorangehenden Ansprüche, wobei die Entfaltung durch den Wiener-Algorithmus oder den Lucy-Richardson-Algorithmus durchgeführt wird.

8. Computerprogramm, welches zur Ausführung eines Verfahrens nach einem der vorhergehenden Ansprüche ange-

**EP 2 306 169 B1**

passt ist, wenn es auf einem Computer ausgeführt wird.

9. Brillouin-optisches-Frequenzbereichsanalyse-System zur verteilten Brillouin-Erfassung, wobei das Brillouin-optisches-Frequenzbereichanalyse-System einen Computer aufweist und angepasst ist, ein Verfahren nach einem der Ansprüche 1 bis 7 durchzuführen.

10. Verwendung eines Verfahrens nach einem der Ansprüche 1 bis 7 zur Bauwerksüberwachung.

**Claims**

1. A method for determining a strain profile in an optical fiber, comprising:

   (a) carrying out a distributed Brillouin sensing measurement in the frequency domain on the optical fiber so as to obtain frequency domain measuring data;
   (b) carrying out a deconvolution operation of the frequency domain measuring data in the frequency domain, wherein the frequency domain measuring data is deconvoluted using an error function;
   (c) carrying out an inverse Fourier transform of the deconvoluted frequency domain measuring data so as to obtain time domain measuring data; and
   (d) obtaining a strain profile of the optical fiber based on the time domain measuring data.

2. The method according to claim 1, wherein the error function is determined based on the superposition of a pump signal of a pump laser and a Stokes signal of a Stokes laser.

3. The method according to claim 1 or 2, wherein the error function is determined based on the modulation parameters of the pump signal of a pump laser and of a Stokes signal of a Stokes laser.

4. The method according to claim 3, wherein the error function is only determined based on the modulation parameters.

5. The method according to any one of the preceding claims, wherein the error function is a linear superposition of functions $\Phi_\xi$, given by:

$$\Phi_\xi = E_p E_s^* A_p A_s \cdot \begin{cases} \dfrac{m_p m_s}{4} \cdot e^{j(k\cdot z-(\omega-2\omega_m)t)} & \xi=1 \\[2ex] \dfrac{m_p+m_s}{2} \cdot e^{j(k\cdot z-(\omega-\omega_m)t)} & \xi=2 \\[2ex] \left(1+\dfrac{m_p m_s}{2}\right) \cdot e^{j(k\cdot z-\omega\cdot t)} & \xi=3 \\[2ex] \dfrac{m_p+m_s}{2} \cdot e^{j(k\cdot z-(\omega+\omega_m)t)} & \xi=4 \\[2ex] \dfrac{m_p m_s}{4} \cdot e^{j(k\cdot z-(\omega+2\omega_m)t)} & \xi=5 \end{cases}$$

with $E_p$ being the electric field strength of the pump wave, $A_p$ being the amplitude of the pump wave, $m_p$ being the modulation index of the pump wave, $E_s^*$ being the complex-conjugate electric field strength of the Stokes wave, $A_s$ being the amplitude of the Stokes wave, $m_s$ being the modulation index of the Stokes wave, and $\omega_m$ being the modulation frequency.

6. The method according to claim 5, wherein the error function is determined by a linear superposition of $\Phi_\xi$, where $\xi$ = 2, 3 4.

7. The method according to any one of the preceding claims, wherein the deconvolution is carried out using the Wiener algorithm or the Lucy-Richardson algorithm.

8. A computer program, which is adapted to carry out a method according to any one of the preceding claims when it is executed on a computer.

9. A Brillouin optical frequency domain analysis system for distributed Brillouin sensing, the Brillouin optical frequency domain analysis system comprising a computer and being adapted to carry out the method according to any one of the claims 1 to 7.

10. Use of a method according to any one of claims 1 to 7 for structural monitoring.

**Revendications**

1. Procédé de détermination d'un profil de déformation dans une fibre optique, comprenant

   (a) la réalisation d'une mesure de détection de Brillouin distribuée dans le domaine de fréquence sur la fibre optique, afin d'obtenir des données de mesure du domaine de fréquence;
   (b) la réalisation d'une opération de déconvolution des données de mesure du domaine de fréquence dans le domaine de fréquence, les données de mesure du domaine de fréquence étant déconvoluées avec une fonction d'erreur ;
   (c) la réalisation d'une transformation de Fourier inverse des données de mesure du domaine de fréquence déconvoluées afin d'obtenir des données de mesure du domaine temporel ; et
   (d) l'obtention d'un profil de déformation de la fibre optique sur la base des données de mesure du domaine temporel.

2. Procédé selon la revendication 1, la fonction d'erreur étant déterminée sur la base de la superposition d'un signal de pompage d'un laser de pompage et d'un signal de Stokes d'un laser de Stokes.

3. Procédé selon la revendication 1 ou 2, la fonction d'erreur étant déterminée sur la base des paramètres de modulation d'un signal de pompage d'un laser de pompage et d'un signal de Stokes d'un laser de Stokes.

4. Procédé selon la revendication 3, la fonction d'erreur étant déterminée uniquement sur la base des paramètres de modulation.

5. Procédé selon l'une des revendications précédentes, la fonction d'erreur étant une superposition linéaire des fonctions $\Phi_\xi$, donnée par :

$$\Phi_\xi = E_p E_s^* A_p A_s \cdot \begin{cases} \dfrac{m_p m_s}{4} \cdot e^{j(k \cdot z - (\omega - 2\omega_m)t)} & \xi = 1 \\[2mm] \dfrac{m_p + m_s}{2} \cdot e^{j(k \cdot z - (\omega - \omega_m)t)} & \xi = 2 \\[2mm] \left(1 + \dfrac{m_p m_s}{2}\right) \cdot e^{j(k \cdot z - \omega \cdot t)} & \xi = 3 \\[2mm] \dfrac{m_p + m_s}{2} \cdot e^{j(k \cdot z - (\omega + \omega_m)t)} & \xi = 4 \\[2mm] \dfrac{m_p m_s}{4} \cdot e^{j(k \cdot z - (\omega + 2\omega_m)t)} & \xi = 5 \end{cases}$$

$E_p$ étant l'intensité du champ électrique de l'onde de pompage, $A_p$ étant l'amplitude de l'onde de pompage, $m_p$ étant l'indice de modulation de l'onde de pompage, $E_s^*$ étant l'intensité du champ électrique conjuguée-complexe de l'onde de Stokes, $A_S$ étant l'amplitude de l'onde de Stokes, $m_S$ étant l'indice de modulation de l'onde de Stokes et $\omega_m$ étant la fréquence de modulation.

6. Procédé selon la revendication 5, la fonction d'erreur étant déterminée par une superposition linéaire de $\Phi_\xi$ avec $\xi$ = 2, 3, 4.

7. Procédé selon l'une des revendications précédentes, la déconvolution étant effectuée à l'aide de l'algorithme de Wiener ou de l'algorithme de Lucy-Richardson.

8. Programme informatique qui est configuré pour l'exécution d'un procédé selon l'une des revendications précédentes, lorsqu'il est exécuté sur un ordinateur.

9. Système d'analyse dans le domaine de fréquence optique de Brillouin pour une détection de Brillouin distribuée, le système d'analyse dans le domaine de fréquence optique de Brillouin comprenant un ordinateur et étant configuré pour exécuter un procédé selon l'une des revendications 1 à 7.

10. Utilisation d'un procédé selon l'une des revendications 1 à 7 pour la surveillance d'une construction.

Fig. 1

Fig. 2

Fig. 3

Fig. 4

Δf_B [GHz]

Fig. 5

Fig. 6

Fig. 7

Fig. 8

Fig. 9

Fig. 10

Fig. 11

Fig. 12

Fig. 13

<u>1400</u>

<u>1410</u> | Durchführen einer verteilten Brillouin-Erfassungs-Messung im Frequenzbereich an der optischen Faser, um Frequenzbereich-Messdaten zu erhalten

<u>1420</u> | Durchführen einer Entfaltungsoperation der Frequenzbereich-Messdaten im Frequenzbereich, wobei die Frequenzbereich-Messdaten mit einer Fehlerfunktion entfaltet werden

<u>1430</u> | Durchführen einer inversen Fourier-Transformation der entfalteten Frequenzbereich-Messdaten, um Zeitbereich-Messdaten zu erhalten

<u>1440</u> | Erlangen eines Dehnungsprofils der optischen Faser auf Basis der Zeitbereich-Messdaten

# Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. BERNINI et al.** An accurate high-resolution technique for distributed sensing based on frequency-domain Brillouin scattering. *IEEE PHOTONICS TECHN. LETTERS,* 2006, vol. 18 (1), 280-282